# EUROPEAN PATENT SPECIFICATION

(11) **EP 2 176 169 B1**
(45) Date of publication and mention of the grant of the patent: **07.03.2012**
(21) Application number: 08797019.0
(22) Date of filing: 01.08.2008
(51) Int. Cl.: C01G 23/02, C01G 25/04, B01D 53/68, C01B 33/107

(54) **PROCESS FOR PREPARING TITANIUM TETRACHLORIDE USING OFF-GASES FROM A SILICA AND ZIRCON CARBO-CHLORINATION PROCESS**
VERFAHREN ZUR HERSTELLUNG VON TITANTETRACHLORID DURCH VERWENDUNG DER ABGASE AUS EINEM KIESELERDE- UND ZIRKON-CARBOCHLORIERUNGSVERFAHREN
PROCÉDÉ DE PRÉPARATION DE TÉTRACHLORURE DE TITANE EN UTILISANT LES GAZ DE DÉGAGEMENT D'UN PROCÉDÉ DE CARBO-CHLORINATION DE SILICE ET DE ZIRCON

(30) Priority: 01.08.2007 US 962792 P
(43) Date of publication of application: 21.04.2010
(73) Proprietor: E. I. du Pont de Nemours and Company, Wilmington, DE 19898 (US)
(72) Inventor: BECNEL, Timothy, J., Covington, Louisiana 70435 (US); HSU, Yung-Hsing, Samson, Gulfport, Mississippi 39503 (US); MUSICK, Charles, David, Waverly, Tennessee 37185 (US); AKSER, Mustafa, Orange Park, Florida 32073 (US); ZAHER, Joseph, J., Newark, Delaware 19711 (US)
(74) Representative: Towler, Philip Dean
(86) International application number: PCT/US2008/071860
(87) International publication number: WO 2009/018501

(56) References cited:
- WO-A-82/04199
- GB-A- 759 724
- US-A- 2 952 513

## Description

The present disclosure relates to a process for preparing titanium tetrachloride, and in particular to a process for preparing titanium tetrachloride that utilizes off gases from the carbo-chlorination process to prepare silicon and zircon tetrachloride.

### Background of the Disclosure

The direct chlorination of zircon ore particles or silica particles in a carbo-chlorination process in which a fluidized bed reactor in the presence of high concentrations of carbon particles, and at a temperature within the range at which zircon will react with chlorine to form zirconium and silicon chlorides is known. The bed temperatures run well in excess of 1000°C, and this presents a number of issues. First, high levels of CO are generated in place of CO₂. CO uses more coke in the carbo-chlorination process leading to higher operating costs. Next, the high temperature leads to accelerated brick wear in the chlorinator. Additionally, operating at lower temperatures to minimize brick loss results in un-reacted chlorine in the chlorinator off gas. This un-reacted chlorine would be a chlorine yield loss and require additional treatment steps downstream.

A need exists for a process that recovers the CO generated in the direct chlorination of zircon ore particles, and a process for economically preparing titanium tetrachloride. A need also exists for a process that increases the life of the bricks in the chlorinator, and utilizes the un-reacted chlorine that results from running the carbon chlorination process at a lower temperature.

### SUMMARY OF THE DISCLOSURE

The present disclosure provides an improved process for preparing titanium tetrachloride comprising:
(a) reacting an ore comprising an oxide with a chlorine and a carbon compound at a temperature of about 900°C to about 1300°C to form the corresponding chlorides and off-gas comprising carbon monoxide, wherein the oxide is selected from the group consisting of silica, zircon and mixtures thereof, and wherein the carbon compound is selected from the group consisting of coke, charcoal, silicon carbide and mixtures thereof; and
(b) reacting titanium dioxide with a stream comprising the off gas formed in step (a) under conditions effective for forming titanium tetrachloride and carbon dioxide.

The disclosure solves the problem caused by CO generation in the chlorination of oxide particles, such as zircon and silica and mixtures thereof, especially the high levels formed at high temperatures as well as the problem of unreacted chlorine that results when low temperatures are used to avoid brick wear by feeding the CO-containing off gas to a carbo-chlorination process for forming titanium tetrachloride.

### BRIEF DESCRIPTION OF THE DRAWINGS

Figure 1 is a simplified schematic flow diagram of the process for preparing titanium tetrachloride by utilizing the off-gases from the process for preparing zirconium tetrachloride and silicon tetrachloride.
Figure 2 is a simplified schematic flow diagram of the process for preparing titanium tetrachloride integrated with the oxidation of titanium tetrachloride to produce titanium dioxide.

### DETAILED DESCRIPTION OF THE DISCLOSURE

The ore which can be used as a feed source for the oxide is a oxide-bearing ore. The metal oxide-bearing ore is selected from the group consisting of zircon and silica. Sources for the ore include zircon sand and silica. The term "metal oxide" may be used herein to include silica as well as zircon.

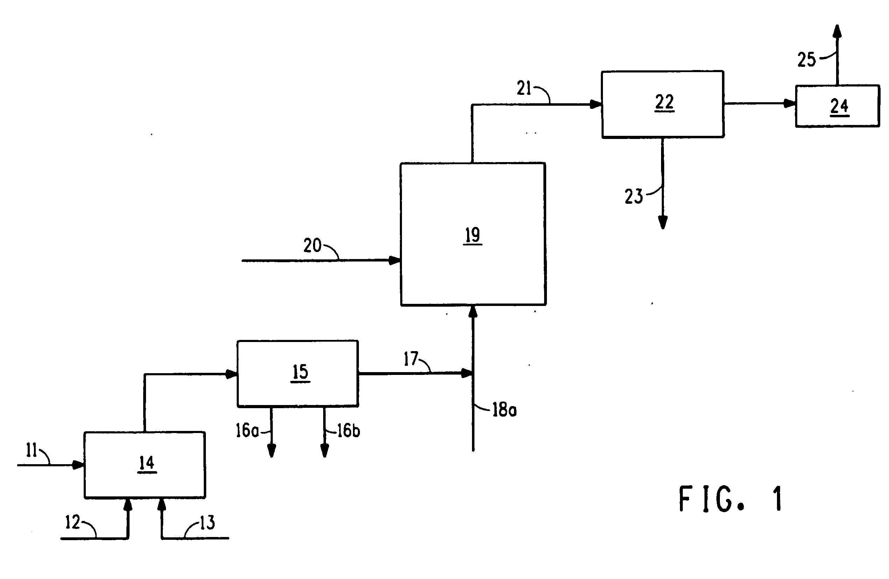

Titanium tetrachloride can be produced by a two stage process shown in Figure 1. In a specific embodiment, in the first stage, the disclosure comprises chlorinating within a fluidized bed reactor a granular zircon ore in the presence of carbon by continuously passing a chlorine-containing gas through the ore and carbon mixture to maintain said bed in a fluidized state, throughout the reaction maintaining a high ratio on the order of about 1:2, typically about 1:3 to about 3:4 by weight of unreacted carbon to total solids in the bed, maintaining the temperature in the reaction bed within the range of about 900 to about 1300°C, more typically in the range of about 1000 to about 1150°C, even up to 1200°C, even more typically from about 1025 to about 1150 ° C while continuously withdrawing the reaction product vapors, and separating and recovering the zirconium tetrachloride and silicon tetrachloride from the withdrawn products.

In general, the process comprises a first carbo-chlorination process and a second carbon chlorination process. In the first carbon chlorination process a metal oxide-bearing ore can be reacted with chlorine and a carbon source to provide the corresponding metal chloride and gas comprising CO and CO₂. In the second carbon chlorination process a titanium-bearing ore is reacted with chlorine and a carbon source in the presence of the gas from the first carbon chlorination process to form titanium tetrachloride. The titanium tetrachloride can be used in a process for making titanium dioxide in an oxidation process.

Referring to Figure 1, there is shown a fluidized bed reaction chamber 14, more particularly, a first fluidized bed chlorinator, suitably insulated to provide the desired reaction temperature and low corrosion of the reactor's refractory walls. Inlets are disposed as shown through which solid reactants such as granular zircon ore 11 and other carbon source 13, such as coke, can be continuously or intermittently fed. An inlet situated at the bottom of the reaction chamber 14 provides a means for introducing vapor reactants, such as chlorine 12, and, if desired, inert gas to maintain the solids in fluidized state in the bed which is contained within the lower portion of the reaction chamber 14. A space is maintained above the solids in the fluidized bed for separating solids from the reaction product vapors. An outlet is provided positioned in the upper portion of the reactor through which the exit gases from the reactor can optionally pass to a small cyclone separator (not shown), having a discharge outlet for separation and removal of the finest bed particles blown from the bed. The shape of the reactor and number of inlets for fluidizing gas and for solids feed can be varied as desired. Typically, materials of construction utilized are resistant to the corrosive conditions of the reaction, a suitable refractory for the shell being high silica bricks. The free space above the fluidized bed reactor is typically operated slightly above atmospheric pressure (in the range of 2-10 p.s.i.(13.8-68.9 kPa)) to avoid leakage of moisture containing air into the reactor, and to simplify control. If desired, however, pressures higher or lower can be utilized.

The carbon used as the reducing agent can be in the form of relatively coarse granular material, the 8 to +100 mesh (0.15 to 2.36 mm) range being typical. The solids feed to the reactor can be adjusted to maintain a high ratio of unreacted carbon to total solids in the bed, and this is expected to improve yield. A ratio of about 1:2 by weight is typical, and acceptable results can be achieved if the ratio is maintained within the range of 1:3 to 3:4. Chlorine gas can be introduced into the reactor at a sufficient velocity and pressure to fluidize the bed and expand it to about twice its static volume. The velocity can be dependent on the size and materials in the bed. The reaction temperature can, preferably, be maintained within the range of about 1025 to about 1150°C. Since the reaction is exothermic, it can not be necessary to supply heat, except in small scale reactors having very high heat losses. To increase the reaction temperature for rate control, oxygen can be supplied along with the chlorine gas. The oxygen can be supplied in any desired volume ratio compared to chlorine up to as high as about 3:2, as long as a high CO/CO₂ ratio in the exit gases is maintained. As a person skilled in the art of carbon chlorination would realize, this high CO/CO₂ ratio in the exit gases can be maintained by controlling the proportion of carbon and oxygen in the reactor, by way of an example, the ratio can be maintained by the use of high ratios of carbon to zircon ore in the feed. However, the difference can vary depending upon the carbon and oxygen content of the starting materials.

Once the gases exiting the chlorinator are cooled in recovery device 15, the zirconium tetrachloride 16a can be collected as a powder and silicon tetrachloride 16b can be condensed and collected as a liquid by known methods to those skilled in the art. As an example, a suitable recovery device can be a condenser.

A stream of non-condensable gases comprising CO and CO₂, typically comprising a major proportion of CO and CO₂ with a minor proportion of other gaseous materials from the reaction, such as unreacted chlorine, is withdrawn from the recovery device 15 via line 17. This stream of non-condensable gases can be referred to as an off-gas, more particularly, a first off-gas.

In other embodiments of the first carbon chlorination process the metal oxide can be SiO₂ which is free of ZrO₂. Various technologies to chlorinate SiO₂ can include but are not limited to 1) SiO₂ carbon chlorination with external heating as described in U.S. patent 3,010,793, 2) Co-chlorination of SiO₂ and silicon metal as described in U.S. patent 3,197,283, 3) Co-chlorination of Silicon Carbide and SiO₂ as described in U.S. patent 2,843,458, or 4) Chlorination of silica and carbonized biomass as described in U.S. patent 4,847,059. Typically, reaction temperatures are maintained in the range of about 1000°C to about 1300°C, more typically in the range of about 1100°C to about 1200°C.

Referring to Figure 1, in the second carbon chlorination process, the non-condensable gas 17, is mixed with a stream of chlorine 18a, and introduced into a second fluidized bed chlorinator 19 through an inlet positioned in the lower part of the reactor. A TiO₂ containing feedstock 20, typically ilmenite, rutile, or titanoferrous slag or a mixture thereof, and optionally a finely divided carbonaceous material, such as finely divided coke, coal or anthracite contained respectively in feed hoppers (not shown) can be charged by gravity into the fluidized bed chlorinator 19 wherein the TiO₂ containing feedstock in the presence of the carbonaceous material and added chlorine undergoes carbon chlorination. The conditions effective for the carbon chlorination comprise temperatures ranging from about 900°C to about 1100°C and the atmosphere can be substantially free of nitrogen as described in U.S. Patent No. 4,854,972. Substantially pure oxygen can optionally be introduced into the fluidized bed chlorinator 19, along with the mixture of CO₂ and CO and chlorine. In the case of equipment breakdown or failure, additional CO₂ can be introduced as an emergency purging gas to maintain the fluidization of solids in the absence of chlorine.

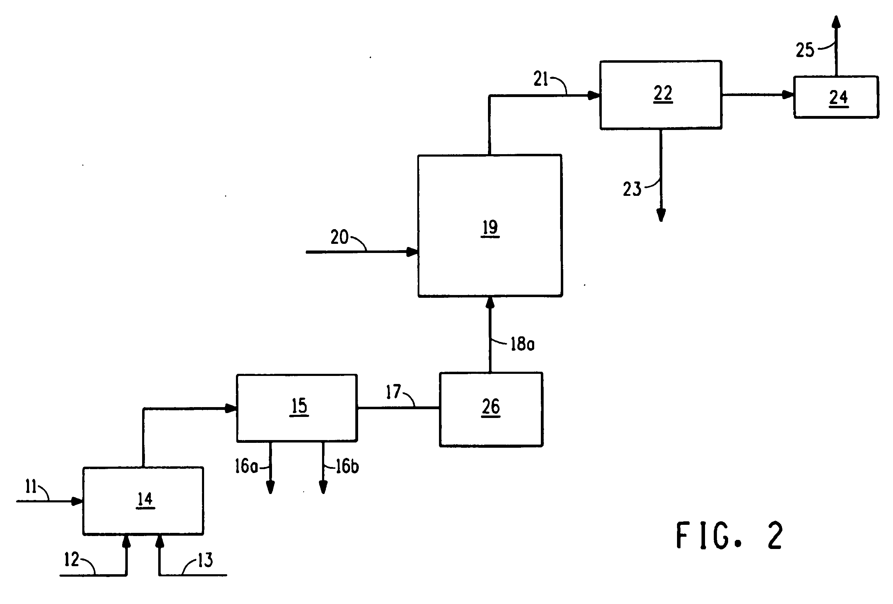

The process additionally can be incorporated into a process for oxidizing titanium tetrachloride to make titanium dioxide. In this manner the process can use the first off-gas comprising carbon monoxide, shown as the non-condensable gas 17 in Figure 2, in the process for oxidizing titanium tetrachloride to make titanium dioxide. The preparation of titanium dioxide by oxidizing titanium tetrachloride in the vapor state with an oxygen-containing gas is well known and such processes have been described in U.S. Patent Nos. 2,488,439; 2,488,440; 2,559,638; and 2,833,627.

An alternate embodiment for recovering the chlorine gas from the zirconia and/or silica chlorination stream can be to feed the off-gas containing CO and Cl₂ as a gaseous feed to the oxidation reactor used in the process for oxidizing titanium tetrachloride to make titanium dioxide, as discussed above. Referring to Figure 2, the off-gas 18b from the titanium tetrachloride oxidation process 26 which comprises carbon monoxide, and chlorides, can then in tum be fed to the second fluidized bed chlorinator 19 to form the gaseous material containing titanium tetrachloride. The off-gas 18b from the oxidation, typically containing recycle Cl₂, can also be fed back to the first carbochlorination reactor 14 where the Cl₂ can be recovered (not shown). The advantages of this embodiment include that any silicon tetrachloride entrained in the off-gas can react in the oxidation process to provide a boost in carbon black undertone (CBU), reduce agglomeration or provide a silica treatment for the TiO₂, usually by way of a silica coating on the TiO₂. For a description of CBU, reference is made to U.S. Patent Nos. 2,488,440 and 5,201 ,949. This embodiment can also prevent the silicon tetrachloride from carrying through reaction which can cause pluggage in the fume disposal section. Also the chlorides that do not react in the chlorination to form silicon tetrachloride can be fully recovered. Typically, the recovery mostly takes place in the second fluidized bed chlorinator.

Thus, the disclosure additionally relates to a process for preparing titanium tetrachloride comprising:
(a) reacting ore comprising a metal oxide with a chlorine and a carbon compound at a temperature of about 900°C to about 1300°C to form the corresponding chloride and first off-gas comprising carbon monoxide, wherein the metal oxide is selected from the group consisting of silica, zircon and mixtures thereof, and wherein the carbon compound is selected from the group consisting of coke, charcoal, silicon carbide and mixtures thereof; and
(b) reacting titanium tetrachloride and an oxygen containing gas in the vapor phase and in the presence of the first off-gas to form titanium dioxide and a second off-gas comprising carbon monoxide;
(c) reacting a titanium dioxide-containing feedstock with the second off-gas under conditions effective for forming titanium tetrachloride and carbon dioxide.

In another alternative embodiment, the exit gas from the first fluidized bed chlorinator containing silicon tetrachloride can be incorporated into the titanium tetrachloride oxidation process to treat the titanium dioxide product with silicon tetrachloride to form a silica-treated titanium dioxide product. In this embodiment the silicon tetrachloride can be fed along with the TiCl₄ feed to the oxidation reactor, to the titanium dioxide-containing discharge of the TiCl₄ oxidation reactor, or to the flue downstream of the oxidation reactor as described in U.S. Patent Nos. 5,562,764; 6,852,306; and 7,029,648. By adding the exit gas containing silicon tetrachloride at these locations, the silicon tetrachloride can react to form SiO₂ on the titanium dioxide and the excess Cl₂ can be recovered by feeding a Cl₂-containing product stream from the oxidation reactor to the second fluidized bed chlorinator via line 18b.

Titanium tetrachloride (TiCl₄), ferrous chloride (FeCl₂), ferric chloride (FeCl₃) and chlorides of other contaminating metals and impurities are simultaneously formed, volatilized and removed as a gaseous mixture along with CO and CO₂ from the chlorinator 19 through line 21, which gaseous mixture is then delivered to a cyclone/condenser unit 22 to remove precipitating and condensing compounds which are discharged through line 23. The gaseous phase which is withdrawn and contains TiCl₄, CO, CO₂, HCl, Cl₂, COS and entrained fine solids can be sent to a TiCl₄ purification unit 24 in order to separate the TiCl₄ vapor from the other gaseous components and thus obtain pure TiCl₄ vapor which is removed through line 25. The ratio of CO:CO₂ exiting the TiO₂ chlorination stage is much lower than the CO:CO2 ratio exiting the ZrO₂ or SiO₂ chlorination process.

An economically useful operation would be to chlorinate high titania zircon ores. Typically, high TiO₂-containing zircon ores contain about 0.15 wt.% to about 45 wt. % TiO2, more typically from about 2 wt. % to about 10 wt.% TiO₂, based on the total amount of the ore. The high TiO₂ zircon ores can be used in the first fluidized bed chlorinator. Such ores are available at a lower price than low TiO₂ ores. The titanium tetrachloride and silicon tetrachloride that is condensed can be separated by means of distillation or condensed separately with the titanium tetrachloride fed to the second fluidized bed chlorinator for chlorinating titanium dioxide-containing feedstock.

## Claims

1. A process for preparing titanium tetrachloride comprising:
(a) reacting ore comprising an oxide with a chlorine and a carbon compound at a temperature of about 900°C to about 1300°C to form the corresponding chloride and off gas comprising carbon monoxide, wherein the oxide is selected from the group consisting of silica, zircon and mixtures thereof, and wherein the carbon compound is selected from the group consisting of coke, charcoal, silicon carbide and mixtures thereof; and
(b) reacting titanium dioxide with the off gas formed in step (a) under conditions effective for forming titanium tetrachloride and carbon dioxide.

2. The process of claim 1 wherein the ore is zircon.

3. The process of claim 1 wherein the ore is silica.

4. The process of claim 1 wherein the ore is a mixture of zircon and silica.

5. The process of claim 1 wherein the ore is a high TiO₂ containing zirconore.

6. The process of claim 1 wherein the carbon compound is in the form of a relatively coarse granular material having a mesh size in the range of about 8 to about +100 mesh (0.15 to 2.36 mm).

7. The process of claim 1 wherein the weight ratio of the weight of the carbon of the carbon compound to total solids is in the order of about 1:3 to about 3:4.

8. The process of claim 2 wherein the temperature in the reaction bed is maintained within the range of about 900 to about 1200°C.

9. The process of claim 7 wherein the temperature in the reaction bed is maintained within the range of about 1000 to about 1150°C.

10. The process of claim 3 wherein the temperature in the reaction bed is maintained within the range of about 1000°C to about 1300°C.

11. The process of claim 9 wherein the temperature in the reaction bed is maintained within the range of about 1100°C to about 1200°C.

12. The process of claim 1 further comprising adding oxygen to the reaction of ore and chlorine.

13. The process of claim 1 wherein the corresponding chloride comprises zirconium tetrachloride, silicon tetrachloride or mixtures thereof.

14. The process of claim 1 wherein the off-gas further comprises carbon dioxide.

15. The process of claim 13 wherein the ratio of CO:CO₂ exiting step (b) is lower than the ratio of CO:CO2 exiting step (a).

16. The process of claim 1 wherein the off gas further comprises chlorine.

17. A process for preparing titanium tetrachloride comprising:
(a) reacting ore comprising an oxide with a chlorine and a carbon compound at a temperature of about 900°C to about 1300°C to form the corresponding chloride and first off-gas comprising carbon monoxide, wherein the oxide is selected from the group consisting of silica, zircon and mixtures thereof, and wherein the carbon compound is selected from the group consisting of coke, charcoal, silicon carbide and mixtures thereof; and
(b) reacting titanium tetrachloride and an oxygen containing gas in the vapor phase and in the presence of the first off-gas under conditions effective to form titanium dioxide and a second off-gas comprising carbon monoxide;
(c) reacting a titanium dioxide-containing feedstock with the second off-gas under conditions effective for forming titanium tetrachloride and carbon dioxide.

18. The process of claim 17 wherein the ore is zircon.

19. The process of claim 17 wherein the ore is silica.

20. The process of claim 17 wherein the ore is a mixture of zircon and silica.

21. The process of claim 17 wherein the ore is a high TiO₂ containing zirconore.

## Patentansprüche

1. Verfahren zur Herstellung von Titantetrachlorid, umfassend:
(a) das Reagieren von Erz, das ein Oxid umfasst, mit einer Chlor- und einer Kohlenstoffverbindung bei einer Temperatur von etwa 900 °C bis etwa 1300 °C unter Bildung des entsprechenden Chlorids und Abgases, das Kohlenmonoxid umfasst, wobei das Oxid aus der Gruppe ausgewählt ist bestehend aus Siliciumdioxid, Zirkonium und Mischungen davon und wobei die Kohlenstoffverbindung aus der Gruppe ausgewählt ist bestehend aus Koks, Holzkohle, Siliciumcarbid und Mischungen davon; und
(b) das Reagieren von Titandioxid mit dem Abgas, das in Schritt (a) gebildet worden ist, unter Bedingungen, die wirksam sind, Titantetrachlorid und Kohlendioxid zu bilden.

2. Verfahren nach Anspruch 1, wobei das Erz Zirkonium ist.

3. Verfahren nach Anspruch 1, wobei das Erz Siliciumdioxid ist.

4. Verfahren nach Anspruch 1, wobei das Erz eine Mischung von Zirkonium und Siliciumdioxid ist.

5. Verfahren nach Anspruch 1, wobei das Erz ein Zirkoniumerz mit hohem TiO₂-Gehalt ist.

6. Verfahren nach Anspruch 1, wobei die Kohlenstoffverbindung in Form eines relativ groben, granulösen Materials vorliegt, das eine Maschengröße im Bereich von etwa 8 bis etwa +100 Maschen (0,15 bis 2,36 mm) aufweist.

7. Verfahren nach Anspruch 1, wobei das Gewichtsverhältnis des Gewichts des Kohlenstoffs der Kohlenstoffverbindung zum gesamten Feststoffgewicht innerhalb einer Größenordnung von etwa 1:3 bis etwa 3:4 liegt.

8. Verfahren nach Anspruch 2, wobei die Temperatur im Reaktorbett innerhalb des Bereichs von etwa 900 bis etwa 1200 °C gehalten wird.

9. Verfahren nach Anspruch 7, wobei die Temperatur im Reaktorbett innerhalb des Bereichs von etwa 1000 bis etwa 1150 °C gehalten wird.

10. Verfahren nach Anspruch 3, wobei die Temperatur im Reaktorbett innerhalb des Bereichs von etwa 1000 °C bis etwa 1300 °C gehalten wird.

11. Verfahren nach Anspruch 9, wobei die Temperatur im Reaktorbett innerhalb des Bereichs von etwa 1100 °C bis etwa 1200 °C gehalten wird.

12. Verfahren nach Anspruch 1, des Weiteren das Hinzusetzen von Sauerstoff zu der Reaktionsmischung von Erz und Chlor umfassend.

13. Verfahren nach Anspruch 1, wobei das entsprechende Chlorid Zirconiumtetrachlorid, Siliciumtetrachlorid oder Mischungen davon umfasst.

14. Verfahren nach Anspruch 1, wobei das Abgas des Weiteren Kohlendioxid umfasst.

15. Verfahren nach Anspruch 13, wobei das Verhältnis von CO:CO₂, das aus Schritt (b) austritt, geringer ist als das Verhältnis von CO:CO₂, das aus Schritt (a) austritt.

16. Verfahren nach Anspruch 1, wobei das Abgas des Weiteren Chlor umfasst.

17. Verfahren zur Herstellung von Titantetrachlorid, umfassend:
(a) das Reagieren von Erz, das ein Oxid umfasst, mit einer Chlor- und einer Kohlenstoffverbindung bei einer Temperatur von etwa 900 °C bis etwa 1300 °C unter Bildung des entsprechenden Chlorids und ersten Abgases, das Kohlenmonoxid umfasst, wobei das Oxid aus der Gruppe ausgewählt ist bestehend aus Siliciumdioxid, Zirkonium und Mischungen davon und wobei die Kohlenstoffverbindung aus der Gruppe ausgewählt ist bestehend aus Koks, Holzkohle, Siliciumcarbid und Mischungen davon; und
(b) das Reagieren von Titantetrachlorid und einem sauerstofflialtigen Gas in der Dampfphase und in Gegenwart eines ersten Abgases unter Bedingungen, die wirksam sind, Titandioxid und ein zweites Abgas zu bilden, das Kohlenmonoxid umfasst;
(c) das Reagieren eines Titandioxid enthaltenden Zuspeisematerials mit dem zweiten Abgas unter Bedingungen, die für das Bilden von Titantetrachlorid und Kohlendioxid wirksam sind.

18. Verfahren nach Anspruch 17, wobei das Erz Zirkonium ist.

19. Verfahren nach Anspruch 17, wobei das Erz Siliciumdioxid ist.

20. Verfahren nach Anspruch 17, wobei das Erz eine Mischung von Zirkonium und Siliciumdioxid ist.

21. Verfahren nach Anspruch 17, wobei das Erz ein Zirkoniumerz mit hohem TiO₂-Gehalt ist.

## Revendications

1. Procédé de préparation de tétrachlorure de titane comprenant:
(a) la réaction de minerai comprenant un oxyde avec un composé chloré et un composé carboné à une température d'environ 900°C jusqu'à environ 1300°C pour former le chlorure correspondant et du gaz résiduel comprenant du monoxyde de carbone, l'oxyde étant choisi parmi le groupe constitué de la silice, du zircon et leurs mélanges, et le composé carboné étant choisi parmi le groupe constitué du coke, du charbon, du carbure de silicium et de leurs mélanges; et
(b) la réaction de dioxyde de titane avec le gaz résiduel formé durant l'étape (a) sous des conditions efficaces permettant de former du tétrachlorure de titane et du dioxyde de carbone.

2. Procédé selon la revendication 1, le minerai étant du zircon.

3. Procédé selon la revendication 1, le minerai étant de la silice.

4. Procédé selon la revendication 1, le minerai étant un mélange de zircon et de silice.

5. Procédé selon la revendication 1, le minerai étant du minerai de zircon à teneur élevée en TiO₂.

6. Procédé selon la revendication 1, le composé carboné se présentant sous la forme d'un matériau granuleux relativement grossier ayant une taille de mesh située dans la plage d'environ 8 à environ +100 mesh (0,15 à 2,36 mm).

7. Procédé selon la revendication 1, le rapport en poids du poids du carbone du composé carboné sur les matières solides totales étant de l'ordre d'environ 1:3 à environ 3:4.

8. Procédé selon la revendication 2, la température dans le lit réactionnel étant maintenue dans la plage d'environ 900 à environ 1200°C.

9. Procédé selon la revendication 7, la température dans le lit réactionnel étant maintenue dans la plage d'environ 1000 à environ 1150°C.

10. Procédé selon la revendication 3, la température dans le lit réactionnel étant maintenue dans la plage d'environ 1000°C à environ 1300°C.

11. Procédé selon la revendication 9, la température dans le lit réactionnel étant maintenue dans la plage d'environ 1100°C à environ 1200°C.

12. Procédé selon la revendication 1, comprenant en outre l'addition d'oxygène à la réaction du minerai et du chlore.

13. Procédé selon la revendication 1, le chlorure correspondant comprenant du tétrachlorure de zirconium, du tétrachlorure de silicium ou leurs mélanges.

14. Procédé selon la revendication 1, le gaz résiduel comprenant en outre du dioxyde de carbone.

15. Procédé selon la revendication 13, le rapport du CO:CO₂ sortant de l'étape (b) étant inférieur au rapport du CO:CO₂ sortant de l'étape (a).

16. Procédé selon la revendication 1, le gaz résiduel comprenant en outre du chlore.

17. Procédé de préparation de tétrachlorure de titane comprenant:
(a) la réaction de minerai comprenant un oxyde avec un composé chloré et un composé carboné à une température d'environ 900°C à environ 1300°C pour former le chlorure correspondant et le premier gaz résiduel comprenant du monoxyde de carbone, l'oxyde étant choisi parmi le groupe constitué de la silice, du zircon et de leurs mélanges, et le composé carboné étant choisi parmi le groupe constitué du coke, du charbon, du carbure de silicium et de leurs mélanges; et
(b) la réaction de tétrachlorure de titane et d'un gaz contenant de l'oxygène dans la phase vapeur et en présence du premier gaz résiduel sous des conditions efficaces pour former du dioxyde de titane et un second gaz résiduel comprenant du monoxyde carbone;
(c) la réaction d'une charge d'alimentation contenant du dioxyde de titane avec le second gaz résiduel sous des conditions efficaces pour former du tétrachlorure de titane et du dioxyde de carbone.

18. Procédé selon la revendication 17, le minerai étant du zircon.

19. Procédé selon la revendication 17, le minerai étant de la silice.

20. Procédé selon la revendication 17, le minerai étant un mélange de zircon et de silice.

21. Procédé selon la revendication 17, le minerai étant un minerai de zircon à teneur élevée en TiO₂.
